# EUROPEAN PATENT SPECIFICATION

(11) **EP 4 048 734 B1**
(45) Date of publication and mention of the grant of the patent: **20.05.2026**
(21) Application number: 20793384.7
(22) Date of filing: 23.10.2020
(51) Int. Cl.: C08L 77/06, C02F 1/02, C02F 103/02, C02F 103/42

(54) **POLYAMIDE COMPOSITION**
POLYAMIDZUSAMMENSETZUNG
COMPOSITION POLYAMIDE

(30) Priority: 25.10.2019 EP 19306386
(43) Date of publication of application: 31.08.2022
(73) Proprietor: BASF SE, 67056 Ludwigshafen am Rhein (DE)
(72) Inventor: CHARVET, Agathe, 69006 Lyon (FR); BADEL, Thierry, 69008 Lyon (FR); BARRAUD, Thomas, 69110 Sainte-Foy-lès-Lyon (FR)
(74) Representative: BASF IP Association
(86) International application number: PCT/EP2020/079872
(87) International publication number: WO 2021/078933

(56) References cited:
- JP-A- 2007 154 107
- JP-B2- 5 388 165
- US-A1- 2014 296 385

## Description

### TECHNICAL FIELD

The present invention relates to polyamide compositions having decreased release of substances in warm water and increase resistance to oxidizing agents and which therefore are suitable for warm water applications, in particular for warm drinking water applications.

### BACKGROUND ART

Polyamides are synthetic polymers widely used for the manufacture of diverse shaped articles, including those which are in contact with warm drinking water, such as pipes, hoses, fittings, sealings and tanks.

In these fields of use, it is important that the organic materials in contact with water, and in particular drinking water (i.e. water intended for human consumption) do not release substances in concentrations exceeding the limits considered unavoidable according to the generally acceptable technical standards, directly or indirectly affect the level of protection of human health, or alter the odor or flavor of the water. This problem relates to cold-water applications but is even more pronounced for warm-water applications.

Oxidizing agents, such as halogen-containing oxidizing agents, for example, diatomic halogens, halogen radicals, halogen oxides, halogen amines and/or halogen oxoanion salts or their precursors are extensively used for water purification, disinfection and bleaching. Hence, water containing such dissolved chemicals may be present in drinking water purified with chlorine containing chemicals, swimming pool water, water for disinfection at medical facilities, water for/from bleaching processes in textile and paper industries.

US 2014/296385 A1 discloses a composition comprising a semi-aromatic polyamide and a crosslinked polyolefin, used in e.g. consumer goods and packaging applications, which require, among others, high temperature stability and ageing resistance. Disclosed is in particular (Example 1) a composition comprising
69 wt.-% PA 11/10T with a C/CNHO ratio of 10;
10 wt.-% Lucalene 3110, PE copolymer, corresponding to polyolefin;
20 wt.-% Lotader 4700/AX8900, polyethylene copolymers, comprising an ethylenically unsaturated acid;
0.7 wt.-% Iodine 201, being a thermal stabiliser comprising CuI and KI.

Additionally, up to 30 wt.-% of a fibrous filler, namely glass fibres, are disclosed for the composition.

JP 5 388165 B2 relates to compositions based on polyamides and PPE having good mechanical properties and improved heat resistance. Disclosed is (Example 1) a composition comprising
28 wt.-% PA 9T with a C/CNHO ratio of 8.5;
28 wt.-% PPE;
0.3 wt.-% maleic anhydride compatibiliser;
14 wt.-% thermal stabiliser (phosphorus/aluminium);
30 wt.-% glass fibers.
The reference further discloses citric acid as compatibiliser in a range of 0.5-5 wt.-%.

JP 2007 154107 A relates to a composition comprising polyamides and PPE having low water absorption, excellent heat resistance and enhanced mechanical properties. The reference discloses (Example 5) a composition comprising
i) 50 wz.-% PA9T;
ii) 40 wt.-% PPE;
iii) 10 wt.-% SEBS with 0.4 wt.-% maleic anhydride;
iv) 0.05 wt.-% thermal stabiliser PPA.

Polyamides have poor resistance to oxidizing agents. They lose strength after being in contact with, for example, sodium hypochlorite solution for a few hours and an important degradation of surface aspect occurs at the surface of the articles made of polyamides.

While polyamide-based compositions are raw materials that can be converted to plastic articles and parts, in view of the increased temperatures in warm water applications, it is difficult to find formulations, especially based on conventional polyamides, which have low release of substances in warm water. Furthermore, it is also difficult to find formulations based on conventional polyamides which have good resistance to oxidizing agents and which make it possible to meet the specifications of this application.

The inventors have now found that the use of a polyolefin and/or a phenyl ether polymer in a polyamide-based composition, wherein the polyamide is an aliphatic, cycloaliphatic or semiaromatic polyamide having a total C/CONH ratio of greater than 6 (>6) makes it possible to decrease the release of substances in warm water and to increase resistance to oxidizing agents.

### SUMMARY OF THE INVENTION

The invention thus relates to a polyamide composition, comprising
i) from 23.95 wt.% to less than 63.95 wt.% of an aliphatic or semiaromatic polyamide selected from the group consisting of polyamide 11, polyamide 12, polyamide 6.10, polyamide 6.12, polyamide 4.10, polyamide 6.6/6.T, polyamide 10.10, polyamide 6.18, and mixtures thereof, having a total C/CONH ratio of greater than 6,
ii) from 5 wt.% to 20 wt.% of a polyolefin and/or a phenyl ether polymer, 10
iii) from 1 wt.% to 10 wt.% of a compatibilizer,
iv) from 0.05 wt.% to 1 wt.% of a thermal stabilizer, and
v) from greater than 30 wt.% to 70 wt.% of a filler, each based on the total weight of the composition.

The invention also concerns a method of decreasing the release of substances in warm water from and/or increasing resistance to oxidizing agents of the polyamide composition.

In a further embodiment, the invention relates to the use of the polyamide composition for preparing an article for warm water applications, preferably warm drinking water applications.

In a further embodiment, the invention relates to the use of an article comprising the polyamide composition
for warm water applications, preferably warm drinking water applications.

Finally, the invention relates to an article comprising the polyamide composition as defined above.

### DETAILED DESCRIPTION

In the present description, wherein an element or composition is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components.

The term "comprising" includes "consisting essentially of" and "consisting of".

The sign "%" or "wt.%" refers to "weight percent" unless specifically stated otherwise.

In the present specification, the description of a range of values for a variable, defined by a bottom limit, or a top limit, or by a bottom limit and a top limit, also comprises the embodiments in which the variable is chosen, respectively, within the value range: excluding the bottom limit, or excluding the top limit, or excluding the bottom limit and the top limit.

In the present specification, where an element or composition is said to be included in and/or selected from a list of recited elements or components, which should be understood that in related embodiments explicitly contemplated here, the element or component can also be any one of the individual recited elements or components, or can also be selected from a group consisting of any two or more of the explicitly listed elements or components.

For example, where in an embodiment the choice of an element from a group of elements is described, the following elements are also explicitly described:
- the choice of two or more elements from the group,
- the choice of an element from a subgroup of elements consisting of a group of elements from which one or more elements have been removed.

The use of the singular "a" or "one" herein includes the plural unless specifically stated otherwise.

In addition, if the term "about" is used before a quantitative value, the present teachings also include the specific quantitative value itself, unless specifically stated otherwise. As used herein the term "about" refers to a ± 10 % variation from the nominal value unless specifically stated otherwise.

The term "and/or" includes the meanings "and", "or" and also all the other possible combinations of the elements connected to this term.

The invention relates to a polyamide composition, comprising
i) from 23.95 wt.% to less than 63.95 wt.% of an aliphatic or semiaromatic polyamide selected from the group consisting of polyamide 11, polyamide 12, polyamide 6.10, polyamide 6.12, polyamide 4.10, polyamide 6.6/6.T, polyamide 10.10, polyamide 6.18, and mixtures thereof, having a total C/CONH ratio of greater than 6,
ii) from 5 wt.% to 20 wt.% of a polyolefin and/or a phenyl ether polymer,
iii) from 1 wt.% to 10 wt.% of a compatibilizer,
iv) from 0.05 wt.% to 1 wt.% of a thermal stabilizer, and
v) from greater than 30 wt.% to 70 wt.% of a filler, each based on the total weight of the composition.

The polyamides are polyamide 11, polyamide 12, polyamide 6.10, polyamide 6.12, polyamide 4.10, polyamide 6.6/6.T, polyamide 10.10, polyamide 6.18, and mixtures thereof. Particularly preferred is polyamide 6.10.

The polyamide in the composition of the invention has a total C/CONH ratio of greater than 6, preferably of greater than 7. Preferably the C/CONH ratio is at most 12. The C/CONH ratio is defined as the total number of carbon atoms in the polyamide divided by the number of CONH moieties in the polyamide, wherein the "total" numer of carbon atoms is defined as the number of carbon atoms including the carbon atoms of the CONH moieties. For example, polyamide 6 has 6 total carbon atoms per each CONH moiety. Therefore, the total C/CONH ratio of polyamide 6 is 6. Consequently, polyamide 6 is not suitable as polyamide for the composition of the present invention.

Preferably, the composition comprises more polyamide than the sum of a) the polyolefin and/or phenyl ether polymer and b) the compatibilizer. Thus, the weight ratio of 1.) polyamide to 2.) (polyolefin and/or phenyl ether polymer and compatibilizer) should be above 1, preferably above about 1.2, more preferably above about 1.4, even more preferably above about 1.6.

The composition of the invention furthermore comprises a polyolefin and/or a phenyl ether polymer. Thus, the composition may comprise a polyolefin, a phenyl ether polymer, or their mixture. The composition comprises from 5 wt.% to 20 wt.% of the polyolefin, from 5 wt.% to 20 wt.% of the phenyl ether polymer, or from 5 wt.% to 20 wt.% of the total amount of polyolefin and phenyl ether polymer.

Suitable polyolefins are for example thermoplastic polyolefins, such as polyethylene, polypropylene, polymethylpenthene and polybutene-1. Preferred polyolefins are polyethylene and polypropylene, in particular linear low density polyethylene (LLDPE), high density polyethylene (HDPE) and polypropylene (PP).

Suitable phenyl ether polymers are polymers that can be obtained by oxidation-polymerizing a phenol compound. As specific examples of the phenol compound, there may be given for example phenol, o-, m- or p-cresol, 2,6-, 2,5-, 2,4- or 3,5-dimethylphenol, 2-methyl-6-phenylphenol, 2,6-diphenylphenol, 2,6-diethylphenol, 2-methyl-6-ethylphenol and 2,3,5-, 2,3,6- or 2,4,6-trimethylphenol. These phenol compounds may be used as a mixture of them. Preferred phenyl ether polymers are polyphenyl ethers (PPEs) and polyphenylene oxides (PPOs). The family of polyphenylene ethers may include those having a C1 to C4 alkyl substitution in the two positions ortho to the oxygen ether atom. Illustrative members of this class are: poly(2,6-diemthyl-1,4- phenylene)ether; poly(2,6-diethyl-1,4-phenylene)ether; poly(2-methyl-6-ethyl-1,4-phenylene)ether; poly(2,6- dipropyl-1,4-phenylene)ether; poly(2-ethyl-6-propyl 1,4-phenylene)ether; and the like; most preferably po ly(2,6-dimethyl-1,4-phenylene)ether.

In a preferred embodiment, at least one of the polyolefin / phenyl ether polymer is a semi-crystalline polymer. More preferably, the composition comprises at least one semi-crystalline polyolefin, in particular HDPE.

A compatibilizing agent will be employed in the preparation of the compositions. When used herein and in the appended claims the term "compatibilizing agent" is meant to refer to those polyfunctional, non rubbery compounds and/or polymers which interact with the polyolefin or the polyphenylene ether, the polyamide or both, chemically, e.g. by grafting, or physically, e.g. by altering the surface characteristics of the dispersed phase and/or enhancing the dispersion thereof, so as to improved the compatibility of the resin mixture.

As compatibilizer, the composition of the present invention may comprise an ionomer, i.e. a polymer composed of repeating units of both electrically neutral repeating units and ionized units covalently bonded to the polymer backbone. The ionized units may be carboxylic acid groups. Such polymers may be made by grafting or by copolymerizing a carboxyl or carboxylic anhydride containing compound to attach it to the polymer, such as metal neutralized maleic anhydride grafted ethylene/ α-olefin polymer. Preferred metal cations for these carboxylate salts include Zn, Li, Mg and Mn. These polymers are disclosed as "tougheners" in WO 2009/073429 A1.

Common examples of ionomers may also include polystyrene sulfonate, Nafion^{®} and Hycar^{®}. A preferred ionomer is a copolymer of ethylene and an ethylenically unsaturated acid, more preferably a copolymer of ethylene and methacrylic acid, in particular the ionomer resin available from Dupont under the brand name Surlyn^{®}.

Exemples of the various compatibilizing agents that may be employed in phenyl ether polymer-polyamide blends are:
a) Polyfunctional compoundshaving in the molecule (A) both (a) at least one carbon-carbon double bond and (b) at least one carboxylic acid, acid halide, anhydride, acid anhydride halide, acid amide, acid ester, imido, amino or hydroxyl group; (B) both (a) a group represented by the formula -(-OR) wherein R is hydrogen or an alkyl, aryl, acyl or carbonyl dioxy group and (b) at least two groups, each of which may be the same or different, selected from carboxylic acid, acid halide, acid anhydride, acid anhydride halide, acid ester, acid amide, imido, amino and salts thereof. Preferred examples of such compounds from (A) type are maleic acid; maleic anhydride; fumaric acid; citraconic acid, itaconic acid, maleimide; preferred examples of compounds from (B) type are citric acid, malic acid, and agaricic acid; including the various commercial forms thereof, such as, for example, the anhydrous and hydrated acids. Illustrative of acid esters useful herein include for example, acetyl citrate and mono- and/or di-stearyl citrates and the like; or
b) A second class of modifier resins are those derived from the vinyl aromatic monomers. These include, for example, modified and unmodified polystyrenes; An especially preferred class of vinyl aromatic monomer derived polymer resins are the block copolymers comprising monoalkenyl arene blocks and hydroge nated, partially hydrogenated and non-hydrogenated conjugated diene blocks and represented as AB and ABA block copolymers. Exemplary of typical species of AB block copolymers there may be given: polystyrene-polybutadiene (SBR) polystyrene-polyisoprene and poly(alpha-methylstyrene)-polybutadiene. Exemplary of typical species of triblock copolymers there may be given: polystyrene-polybutadiene-polystyrene (SBS) polystyrene-polyisoprene-polystyrene (SIS) poly(alpha-methylstyrene)-polybutadiene-poly(alpha methylstyrene) and poly(alpha-methylstyrene)-polyisoprene-poly(alpha methystyrene). Particularly preferred class of such triblock copolymers are available commercially as CARIFLEX (R), KRATON D (R) and KRATONG (R) from Shell.

As a specific category, suitable compatibilizers are resins from vinylaromatic monomers of type b) copolymerized or grafted with polyfunctional compounds of type a). Such resins may include Styrene-maleic anhydride copolymers (SMA), maleic anhydride grafted SBS block copolymers and their hydrogenated derivatives, such as SEBS-g-MA.

In one embodiment the composition of the invention comprises a blend of the polyamide and a phenyl ether polymer, wherein the compatibilizer is acetic acid.

One compatibilizer or a mixture of two or more compatibilizers may be used in the composition of the present invention.

The composition of the invention comprises at least 1 wt.% of the compatibilizer. The upper limit of the amount of compatibilizer is 10 wt.%, based on the total weight of the composition.

The composition of the invention furthermore comprises a thermal stabilizer. One thermal stabilizer or a mixture of two or more thermal stabilizers may be employed.

Thermal stabilizers well known in the art for the thermal stabilization of polyamides can be effectively used.

Stabilizers to be used in the composition are generally selected from the group consisting of copper-containing stabilizers, hindered amine compounds, hindered phenol compounds, and phosphorous compounds.

### The copper-containing stabilizer

Stabilizer preferably comprises at least one copper-containing stabilizer. While these copper containing stabilizers can be used alone in the composition, it may also be possible to use the same in combination with one or more of above mentioned recited alternative stabilizers.

Copper-containing stabilizers useful in the practice of the invention may be characterized as comprising a copper compound [compound (Cu)] and an alkali metal halide [halide (M)]. More particularly, the copper-containing stabilizer will consist essentially of a copper compound [compound (Cu)] selected from the group consisting of copper (I) oxide, copper (II) oxide, copper (I) salt, for example cuprous acetate, cuprous stearate, a cuprous organic complex compound such as copper acetylacetonate, a cuprous halide or the like; and an alkali metal halide [halide (M)]. According to certain preferred embodiments, the copper-containing stabilizer will consist essentially of a copper halide selected from copper iodide and copper bromide and the alkali metal halide will preferably be selected from the iodides and bromides of lithium, sodium and potassium.

A particularly preferred combination is the combination of CuI and KI. Another very advantageous combination is the mixture of Cu2O and KBr.

The copper-containing stabilizer will preferably consists of a copper compound [compound (Cu)], preferably with Copper in oxidation state +I, and an alkali metal halide [halide (M)] wherein the atomic weight ratio Cu:halide, i.e. the weight ratio between the overall Copper content of the compound (Cu) and the overall halogen content of the halide (M) and possibly of the compound (Cu) (if this latter comprises halogen) is of 1:99 to 30:70, preferably 5:95 to 20:80. A weight ratio Cu:halide which has been found particularly effective is of about 0.15 (i.e. corresponding to about 13:87).

The combined weight of compound (Cu) and halide (M), i.e. of the copper-containing stabilizer, in the composition will amount to from about 0.05 to about 3 wt.%, preferably from about 0.05 to about 2.5 wt.%, more preferably from about 0.1 to about 1.5 wt.%, based on the total weight of composition.

The amount of the compound (Cu) in the copper-containing stabilizer will generally be sufficient to provide a level of from about 25 to about 1000 ppm, preferably of about 50 to about 500 ppm, more preferably of about 75 to about 150 ppm of Copper in the composition. The amount of the alkali metal halide (halide(M)) associated with the copper-containing stabilizer will generally be sufficient to provide a level of from about 100 to 4000 ppm, preferably of about 300 to about 2000 ppm, more preferably of about 500 to about 1500 ppm of Copper in the composition.

### The hindered amine compound

The expression "hindered amine compound" is used according to its customary meaning in this field and generally intended to denote derivatives of 2,2,6,6-tetramethyl piperidine well known in the art (see for example : Plastics Additives Handbook, 5th ed., Hanser, 2001). The hindered amine compound of the composition according to the present invention may either be of low or high molecular weight.

The hindered amine compounds of low molecular weight have typically a molecular weight of at most 900, preferably at most 800, more preferably of at most 700, still more preferably at most 600 and most preferably of at most 500 g/mol.

The hindered amine compounds of high molecular weight are typically polymeric and have typically a molecular weight of at least 1000, preferably at least 1100, more preferably of at least 1200, still more preferably at least 1300 and most preferably of at least 1400 g/mol.

If used, the hindered amine compound is typically present in an amount of advantageously at least 0.05 wt. %, more preferably at least 0.07 wt. %, still more preferably at least 0.1 wt. %, based on the total weight of the composition.

Similarly, when present, the hindered amine compound is also typically present in an amount of advantageously at most 1 wt. %, based on the total weight of the composition.

### The hindered phenol compound

The expression "hindered phenol compound" is used according to its customary meaning in this field and generally intended to denote derivatives of ortho-substituted phenol, especially (but not limited to) di-tert-butyl-phenol derivatives, well known in the art

If used, the hindered phenol compound is typically present in an amount of advantageously at least 0.05 wt. %, more preferably at least 0.07 wt. %, still more preferably at least 0.1 wt. %, based on the total weight of the composition.

Similarly, when present, the hindered phenol compound is also typically present in an amount of advantageously at most 1 wt. %, based on the total weight of the composition.

### The phosphorous compound

The stabilizers may be at least one phosphorous compound selected from the group consisting of an alkali or alkali earth metal hypophosphites, phosphite esters, phosphonites and mixtures thereof.

Sodium and calcium hypophosphites are preferred alkali or alkali earth metal hypophosphites.

A phosphite ester may be represented by the formula P(OR)3, while a phosphonite may be represented by the formula P(OR)2R, wherein each of R, can be the same or different and are typically independently selected from the group consisting of a C1-20 alkyl, C3-22 alkenyl, C6-40 cycloalkyl, C7-40 cycloalkylene, aryl, alkaryl or arylalkyl moiety.

When used in the composition, the phosphorous compound is preferably present in an amount of at least 0.05 wt. %, more preferably at least 0.07 wt. %, based on the total weight of the composition.

The phosphorous compound is also preferably present in an amount of at most 1 wt. %, more preferably at most 0.5 wt. %, still more preferably at most 0.25 wt. %, based on the total weight of the composition.

In one embodiment, the polyamide composition according to the invention further comprises a filler. In the context of the invention the term "filler" includes "reinforcement", such as fiber.

The composition comprises from above 30 wt.% to 70 wt.%, preferably from 31 wt.% (such as 32 wt.%, 33 wt.% or 34 wt.%) to 70 wt.%, more preferably from 35 wt.% to 70 wt.%, and even more preferably from 40 wt.% to 70 wt.% of the filler, each based on the total weight of the composition.

The composition may comprise one filler or a mixture of two or more fillers.

Said filler can be any reinforcement agent, but it is preferably selected from the group consisting of calcium carbonate, glass fibers, glass flakes, glass beads, carbon fibers, talc, mica, wollastonite, calcined clay, kaolin, diatomite, magnesium sulphate, magnesium silicate, barium sulphate, titanium dioxide, sodium aluminium carbonate, barium ferrite, potassium titanate.

The filler, from morphology perspective, can be hence selected from fibrous fillers and particulate fillers.

Preferably, the filler is chosen from fibrous fillers. Among fibrous fillers, glass fibers are preferred; they include chopped strand A-, E-, C-, D-, S- and R-glass fibers. Glass fibers with circular and non-circular cross sections can be used. The expression 'glass fibers with non-circular cross section' is used herein according to its usual meaning, that is to say it is intended to refer to glass fibers having a cross section having a major axis lying perpendicular to longitudinal direction of the glass fiber and corresponding to the longest linear distance in the cross-section, and a minor axis, corresponding to the linear distance in cross-section in a direction perpendicular to the major axis. The non-circular cross section of the fiber may have a variety of shapes including cocoon-type shape, a rectangual shape, an elliptical shape, a polygonal shape, an oblong shape, without this list being exhaustive. The ratio of the length of the cross section major axis to the minor axis is preferably between about 1.5:1 to about 6:1, more preferably between about 2:1 to about 5:1, still more preferably between about 3:1 to about 4:1.

The composition may also comprise other conventional additives commonly used in the art, including lubricants, plasticizers, colorants, pigments, antistatic agents, flame-retardant agents, nucleating agents, catalysts, and the like. When present, these ingredients are present in an amount of at most 20 wt.%, preferably of at most 10 wt.%, more preferably of at most 8 wt.%, with respect to the total weight of the composition. Typical amounts are depending of the specific conventional additive selected for incorporation in the composition and will be selected by the skilled in the art according to common practice.

In one embodiment the polyamide composition of the invention does not contain any flame-retardant agent.

The polyamide composition of the invention may also comprise one or more other polymers, such as thermoplastic polymers, in particular phenol-carbonyl condensation products such as novolacs, ABS or polyester.

The present inventors found that by blending an aliphatic, cycloaliphatic or semiaromatic polyamide having a total C/CONH ratio of greater than 6, with a polyolefin and/or a phenyl ether polymer, the release of substances in warm water from the thus obtained composition is decreased. In this regard, warm water is considered as water having a temperature of about 60°C, preferably of 60 +/- 2°C. The water preferably is drinking water, in particular water intended for human consumption.

"Decreasing the release of substances in warm water" is to be understood as the reduction of substances, in particular organic substances, migrating from the polyamide composition into the water. The term "decreasing" in this context is to be understood such that the amount of substances, in particular organic substances, migrating from the polyamide composition of the invention into water is reduced compared to the migration of the same substances from the same composition without the polyolefin and/or the phenyl ether polymer into water.

The amount of substances migrating from the composition into water can be assessed according to the Guideline for Hygienic Assessment of Organic Materials in Contact with Drinking Water (KTW Guideline) published by the German Federal Environmental Agency (Umweltbundesamt) "For people and their environment", October 7, 2008. Relevant substances are in particular organic substances. These can be measured by measurement of the total organic carbon (TOC) in a given water sample. The TOC can be measured in accordance with DIN EN 1484. According to the Guideline for Hygienic Assessment of Organic Materials in Contact with Drinking Water (KTW Guideline) the TOC for a given polymer composition must be below 0.5 mg/L in order to pass the test described in the Guidelines.

In one embodiment the composition of the invention has a TOC < 0.5 mg/l according to DIN 1484, as explained in the "Guideline for Hygienic assessment of Organic Materials in Contact with Drinking Water (KTW Guideline) published by the German Federal Environment Agency (Umweltbundesamt) "For People and their Environment" edited on oct. 7th, 2008.

A further aspect of the present invention is the problem that in view of the temperatures in warm water applications, it is difficult to find formulations, especially based on conventional polyamides, which have good resistance to oxidizing agents, either naturally present in water, such as oxygen (O2) dissolved in water, or added into drinkable water for the pourpose of disinfecting it from microlife (ex.: Cl2, NaOCl, HClO, ClO2, H2O2, O3 and the like). The present inventors surprisingly found that by blending an aliphatic, cycloaliphatic or semiaromatic polyamide having a total C/CONH ratio of greater than 6 with a polyolefin and/or a phenyl ether polymer, the resistance to oxidizing agents, such as water oxidizing agents of the composition can be increased. The term "increased" in this context is to be understood such that the resistance to oxidizing agents of a composition according to the invention is increased compared to the resistance to oxidizing agents of the same composition without the polyolefin and/or the phenyl ether polymer.

Furthermore, the present invention therefore relates to a method of decreasing the release of substances in warm water from and/or increasing the resistance to oxidizing agents of the polyamide composition.

As used herein, the term "resistance to oxidizing agents" refers to retaining the mechanical properties and the surface aspect of a polyamide composition after exposure oxidizing agents, such as diatomic halogens, halogen radicals, halogen oxides, halogen amines and/or halogen oxoanion salts or their precursors, oxygen, oxygen radicals, peroxydes, hydroperoxydes and their radicals, ozone, and the like. It also concerns resistance to dimensional changes due to erosion of material from surface, water contamination from eroded products, increased surface roughness affecting flow properties and promoting bacterial growth, and discoloration. It also concerns an improved tensile strength retention of the polyamide composition.

Oxidizing agents refers to substances that have the ability to oxidize other substances, causing them to lose electrons. In the context of polyamide, oxidizing agents usually cause polyamide chain oxydation and breakage, drop of mechanical properties and an important degradation of surface aspect occurring at the surface of the articles made of polyamide.

Halogen-containing oxidizing agents refers to oxidizing agents comprising at least one halogen atom.

Precursors are intended to refers to molecules able to generate diatomic halogens, halogen radicals, halogen oxides, halogen amines and/or halogen oxoanion salts wherein put in contact with polyamide, notably by disproportionation reaction, inside or outside the polyamide matrix.

Halogen-containing oxidizing agents may be organic or inorganic.

Diatomic halogens are notably I₂, Br₂ and Cl₂. Precursors of diatomic halogens are notably their ionic salts such as NaCl, NaBr, and NaI.

The Halogen radicals may be fluorine radical, chlorine radical, bromine radical, or iodine radical. The radicals may be also be present as halogen oxide radicals such FO*, CIO*, BrO* or IO* or may be halogenate radicals (ClO₃*, BrO₃ or IO₃*), or chlorine dioxide, bromine dioxide or iodine dioxide radicals.

Halogen oxides are notably ClO₂, BrO₂, IO₂, and I₂O₅. Precursors of halogen oxides are notably the hypohalogenites and the corresponding diatomic halogen.

Halogen oxoanion salts are notably chosen in the group consisting of:
- Perhalogenate (Oxidation state +7): such as perchlorate (CIO⁻₄), perbromate (BrO⁻₄), and periodate (IO⁻₄);
- Halogenate (Oxidation state +5): such as chlorate (ClO⁻₃), bromate (BrO⁻₃), and iodate (IO⁻₃);
- Halogenite (Oxidation state +3): such as chlorite (ClO⁻₂), and bromite (BrO⁻₂); and
- Hypohalogenite (Oxidation state +1): such as hypochlorite (ClO⁻) and hypobromite (BrO⁻)

Preferably halogen oxoanion salts are alkali metal halogen oxoanion salts; in which alkali metals are the chemical elements found in Group 1 of the periodic table. The alkali metals include: lithium, sodium, potassium, rubidium, cesium, and francium. Halogen oxoanion salts may also be alkaline earth metal halogen oxoanion salts; in which alkali earth metals are the chemical elements found in Group 2 of the periodic table, such as calcium.

More preferably the invention aim to increase resistance to sodium hypochlorite and to Cl2.

Precursors of halogen oxoanion salts are notably the diatomic halogens, reacted with metal hydroxide solutions. Sodium hypochlorite may also be formed from decomposition of chloramines in aqueous media.

Halogen-containing oxidizing agents may also be chosen from halogen amines, such as monochloroamines, dichloroamines, trichloroamines or organochloroamines such as N-chloro tosylamide (Chloramine-T).

Halogen-containing oxidizing agents may notably be bleaching agents having cleaning and or disinfecting properties.

Non-halogen containing oxidizing agents may for example be oxygen (O2), peroxides, hydroperoxydes, ozone and their radicals.

Blending of at least one polyamide with at least one polyolefin and/or phenyl ether polymer may be carried out according to several methods such as for instance:
- Dry blending of at least one polyamide with at least one polyolefin and/or phenyl ether polymer, notably in a mechanical mixer, the solid mixture being then melted, for example via an extrusion process.
- Blending of at least one polyamide with at least one polyolefin and/or phenyl ether polymer in melt, especially by melt compounding during a step of extrusion of the polyamide. Other melt-compounding methods batch- mixing on a Bradender machine or using a two-roll mill, may be used.
- Blending of at least one polyamide with at least one polyolefin and/or phenyl ether polymer in a solvent media.
- Dry blending of at least one polyamide with at least one polyolefin and/or phenyl ether polymer, in form of fine powders and consolidating them as a single part by melt-compression molding.

The polyamide composition according to the invention comprising the polyolefin and/or phenyl ether polymer is especially used as a matrix, notably via granulation, calendering, injection, molding, injection molding or pressing.

It is thus possible for example to prepare granules, chips, pellets, ingots, of all spherical, flat or ovoid shapes, in the form of drops, prisms, parallelepipeds, cylinders or pads.

In particular, when the material is in the form of substantially spherical or ellipsoidal pellets, they can be prepared by an underwater cutting process, as described for example in patents US 2918701 and US 3749539 or else in patent application US 2005/0035483. This process uses a die head provided with holes and fed with the thermoplastic matrix in the melt state, comprising the fillers and optionally one or more additives as described previously. The underwater die head is provided with a rotary knife-holder, the blades of which cut the molten material issuing from the die holes, and the water bath in which the cutting head is submerged allows for rapid cooling of the pellets formed.

Furthermore, the present invention relates to the use of the polyamide composition as defined above for decreasing the release of substances in warm water from an article and/or for increasing the resistance of an article to oxidizing agents.

The compositions according to the invention may be used as raw material in the field of plastics processing, for example for the preparation of articles obtained by injection molding, by injection/blow-molding, by extrusion or by extrusion/blow-molding. According to a common embodiment, the polyamide composition is extruded in the form of rods, for example in a twin-screw extrusion device, which are then chopped into granules. Molded components may be prepared by melting the granules produced above and feeding the molten composition into injection-molding devices.

The present invention therefore also relates to the use of an article comprising the polyamide composition as defined above for warm water applications, preferably warm drinking water applications.

Furthermore, the present invention relates to an article comprising the polyamide composition as defined above. The article may have a shape permitting to contain, store and/or transport a liquid, in particular water, such as drinking water. The article may be semifinished or finished. The article may comprise or consist of the polyamide of the invention. If the article comptises the polyamide composition it can, for example, be coated with the polyamide composition or part of the article may be manufactured of the polyamide composition.

As articles according to the invention, mention may be made of liquid metering device, drum, pump, pipe, plumbing joints/connectors, valves, container, reservoir, tank, vessel, bottle, box, hose, duct and tube, such as for instance cooling tubes, cooling water housings, engine air guide hoses, hoses for the oil circuit. Said articles may be for instance: metering device, drum, pump, pipe, container, reservoir, tank, vessel, bottle, box, hose, duct and tube.

Preferably these articles are produced from a composition as described above by injection molding, by extrusion or by blow molding.

The following examples are given by way of non-limiting illustration of the present invention.

### EXAMPLES

### Raw material:

- Polyamide PA-6,10 (Solvay, Stabamid^{®} 28CE2 or NEXIS T7005)
- Polyamide PA-6,6 (Solvay, Stabamid^{®} 27AE1)
- HDPE Rigidex HD 5218 EA-Y (INEOS)
- Surlyn^{®} 1652E (DuPont)
- Glass fiber (PPG industries, grade HP3610)
- Plasblak PE 2813 (CABOT) was used as the pigment
- Thermal stabilizer package: Lunanox 1098 (DKSH France), Sodium Hypophosphite Monohydrate (Altichem) and Aluminium stearate (FACI) in weight ratio 55%/18%/27%

### Sample preparation:

Formulations were melt blended in a twin-screw extruder (Coperion, ZSK-26 MC+, 10 barrel, L/D 39). Glass fibers were added to composition through the 4^{th} barrel of the extruder. Pellets were obtained by chopping rods exiting the extruder, which were dried in an oven for 24h under vacuum at 80°C. Table 1 gives the composition of formulations tested (% in weight proportion).

**Table 1**

| | Comparative Example 1 | Comparative Example 2 | Comparative Example 3 | Comparative Example 4 | Example 1 |
|---|---|---|---|---|---|
| PA-6,6 | 49.0% | 27.9% | | | |
| PA- 6,10 | | | 69.0% | 49.0% | 27.9% |
| Glass Fiber | 50.0% | 50.0% | 30.0% | 50.0% | 50.0% |
| HDPE Rigidex | | 15.0% | | | 15.0% |
| Surlyn | | 6.0% | | | 6.0% |
| Plasbak | 0.8% | 0.8% | 0.8% | 0.8% | 0.8% |
| Thermal stabilizer package | 0.2% | 0.3% | 0.2% | 0.2% | 0.3% |

The pellets were molded using an injection molding machine DEMAG^{®} 50T at 250°C for PA6.10 based compound and 290°C for PA6.6 compound with a mold temperature at 85°C to prepare standard 4 mm thick bars (tensile specimen ISO 527) and 2 mm thick plates with the following dimensions 100 mm* 100 mm.

### Drinking warm water certification test:

The plates were tested according to the KTW-Guideline for warm water (60°C). The plates are pre-treated in tap water and test water then exposed to 7 migration steps at 60°C. The final migration water (7^{th} migration) was used for the measure of the total organic carbon (TOC) in accordance with DIN EN 1484. To pass the test the TOC must be below 0.5 mg/l. Results are given in Table 2.

**Table 2**

| | Comparative Example 1 | Comparative Example 2 | Comparative Example 3 | Comparative Example 4 | Example 1 |
|---|---|---|---|---|---|
| TOC (mg/l) | 1.50 | 0.44 | 0.86 | 0.79 | 0.18 |

Table 2 shows that only the example 1 has a TOC value significantly below 0.5 mg/l.

### Chlorine resistance test:

The injection molded tensile bars were exposed to sodium hypochlorite solution with a chlorine content of 5 ppm at pH 7 and at 50°C during 2500h. These measurements were performed in a test bench designed for chlorine ageing. Specimens are immersed in a large tank with chlorinated water in circulation. pH and Chlorine content were regulated all along the ageing. Specimens were collected at 250h, 500h, 1500h and 2500h and were smoothly rinsed with tap water and conditioned at 23°C (relative humidity at 50%) for 24h and then characterized. Table 3 summarized all tensile results according to ISO 527/1A at 23°C and the weight variation from initial state.

**Table 3**

| | **Ageing time** | **Tensile modulus (MPa)** | | **Tensile Strength at break (MPa)** | | **Tensile Strain at break (%)** | | **Weigth (%)** |
|---|---|---|---|---|---|---|---|---|
| | | **Value** | **σ** | **Value** | **σ** | **Value** | **σ** | |
| Example 1 | 0 | 12670 | *290* | 105 | *1.6* | 1.4 | *0.1* | *0* |
| | 250 | 9490 | *300* | 89.4 | *0.5* | 1.9 | *0.1* | *0.5* |
| | 500 | 9220 | *450* | 86.4 | *0.2* | 2.1 | *0.1* | *0.5* |
| | 1500 | 9000 | *410* | 84.6 | *0.5* | 2.2 | *0.1* | *1.2* |
| | 2500 | 8720 | *550* | 82.9 | *1.*7 | 2.3 | *0.1* | *0.9* |
| Comparative Example 1 | 0 | 16800 | *150* | 224 | *3.0* | 2.4 | *0.2* | *0* |
| | 250 | 8780 | *90* | 133 | *0.6* | 6.4 | 0.1 | *2.2* |
| | 500 | 8080 | *110* | 125 | *0.4* | 6.0 | 0.1 | *2.0* |
| | 1500 | 8310 | *50* | 122 | *0.4* | 5.4 | *0.2* | *-0.6* |
| | 2500 | 8260 | *190* | 124 | *0.5* | 5.3 | *0.3* | *-5.5* |
| Comparative Example 2 | 0 | 15680 | *450* | 121 | *3.0* | 1.2 | *0.1* | *0* |
| | 250 | 12030 | *160* | 154 | *0.3* | 4.3 | *0.1* | *1.2* |
| | 500 | 10410 | *80* | 133 | *2.0* | 5.9 | *0.1* | *1.2* |
| | 1500 | 8600 | *170* | 118 | *1.0* | 8.2 | *0.3* | *-1.1* |
| | 2500 | 8890 | *210* | 123 | *0.7* | 7.7 | *0.4* | *-4.9* |
| Comparative Example 3 | 0 | 9100 | *70* | 150 | *1.0* | 4.1 | 0.1 | *0* |
| | 250 | 5950 | *60* | 102 | *0.3* | 8.3 | 0.1 | *1.6* |
| | 500 | 5510 | *50* | 95.8 | *0.5* | 9.4 | *0.2* | *2.0* |
| | 1500 | 5360 | *110* | 92.2 | *1.1* | 8.4 | *0.5* | *0.8* |
| | 2500 | 5600 | *40* | 95.4 | *1.3* | 7.7 | *0.2* | *-3.8* |
| Comparative Example 4 | 0 | 15800 | *140* | 193 | *1.0* | 3.6 | 0.1 | *0* |
| | 250 | 9790 | *90* | 142 | *0.6* | 5.4 | *0.3* | *1.0* |
| | 500 | 9360 | *110* | 133 | *0.7* | 6.2 | *0.3* | *1.3* |
| | 1500 | 9000 | *40* | 126 | *0.4* | 5.9 | *0.3* | *0.3* |
| | 2500 | 9090 | *150* | 130 | *1.2* | 5.6 | *0.3* | *-4.9* |

Table 3 demonstrates that the compositions of the comparative examples undergo a degradation of the tensile strain at break from 500h or eventually 1500h for Comparative Example 2, whereas the composition of Example 1 of the invention resists to degradation up to 2500h. In addition, the compositions of the comparative examples show a weight loss from 1500h, whereas the composition of Example 1 still has a positive weight variation at 2500h.

## Claims

1. Polyamide composition, comprising
i) from 23.95 wt.% to less than 63.95 wt.% of an aliphatic or semiaromatic polyamide selected from the group consisting of polyamide 11, polyamide 12, polyamide 6.10, polyamide 6.12, polyamide 4.10, polyamide 6.6/6.T, polyamide 10.10, polyamide 6.18, and mixtures thereof, having a total C/CONH ratio of greater than 6,
ii) from 5 wt.% to 20 wt.% of a polyolefin and/or a phenyl ether polymer,
iii) from 1 wt.% to 10 wt.% of a compatibilizer,
iv) from 0.05 wt.% to 1 wt.% of a thermal stabilizer, and
v) from greater than 30 wt.% to 70 wt.% of a filler,
each based on the total weight of the composition.

2. Polyamide composition according to claim 1, wherein the polyamide has a total C/CONH ratio of at most 12.

3. Polyamide composition according to claim 1 or 2, wherein the compatibilizer is an ionomer, preferably a copolymer of ethylene and an ethylenically unsaturated acid.

4. Polyamide composition according to claim 1 or 2, comprising the polyamide and a phenyl ether polymer, wherein the compatibilizer is citric acid.

5. Polyamide composition according to any of the preceding claims, wherein the filler is a fibrous filler, preferably glass fiber.

6. Polyamide composition according to any of the preceding claims, wherein the polyolefin and/or phenyl ether polymer is selected from the group consisting of linear low density polyethylene (LLDPE), high density polyethylene (HDPE), polypropylene (PP), polyphenyl ethers (PPE), polyphenylene oxides (PPO), and mixtures thereof.

7. Method of decreasing the release of substances in warm water from and/or increasing the resistance to oxidizing agents of a composition comprising
i) from 23.95 wt.% to less than 63.95 wt.% of an aliphatic or semiaromatic polyamide selected from the group consisting of polyamide 11, polyamide 12, polyamide 6.10, polyamide 6.12, polyamide 4.10, polyamide 6.6/6.T, polyamide 10.10, polyamide 6.18, and mixtures thereof, having a total C/CONH ratio of greater than 6,
ii) from 5 wt.% to 20 wt.% of a polyolefin and/or a phenyl ether polymer,
iii) from 1 wt.% to 10 wt.% of a compatibilizer,
iv) from 0.05 wt.% to 1 wt.% of a thermal stabilizer, and
v) from greater than 30 wt.% to 70 wt.% of a filler,
each based on the total weight of the composition,
comprising the step of blending the polyamide with a polyolefin and/or a phenyl ether polymer.

8. Use of an article, comprising a polyamide composition, comprising
i) from 23.95 wt.% to less than 63.95 wt.% of an aliphatic or semiaromatic polyamide selected from the group consisting of polyamide 11, polyamide 12, polyamide 6.10, polyamide 6.12, polyamide 4.10, polyamide 6.6/6.T, polyamide 10.10, polyamide 6.18, and mixtures thereof, having a total C/CONH ratio of greater than 6, and
ii) from 5 wt.% to 20 wt.% of a polyolefin and/or a phenyl ether polymer
iii) from 1 wt.% to 10 wt.% of a compatibilizer,
iv) from 0.05 wt.% to 1 wt.% of a thermal stabilizer, and
v) from greater than 30 wt.% to 70 wt.% of a filler,
each based on the total weight of the composition,
for warm water applications, preferably warm drinking water applications.

9. Use according to claim 8, wherein the polyamide composition is defined as in any of claims 2 to 6.

10. Article comprising a polyamide composition as defined in any of claims 1 to 6.

11. Use of a polyamide composition comprising
i) from 23.95 wt.% to less than 63.95 wt.% of an aliphatic or semiaromatic polyamide selected from the group consisting of polyamide 11, polyamide 12, polyamide 6.10, polyamide 6.12, polyamide 4.10, polyamide 6.6/6.T, polyamide 10.10, polyamide 6.18, and mixtures thereof, having a total C/CONH ratio of greater than 6,
ii) from 5 wt.% to 20 wt.% of a polyolefin and/or a phenyl ether polymer,
iii) from 1 wt.% to 10 wt.% of a compatibilizer,
iv) from 0.05 wt.% to 1 wt.% of a thermal stabilizer, and
v) from greater than 30 wt.% to 70 wt.% of a filler each based on the total weight of the composition,
for preparing an article for warm water applications, preferably warm drinking water applications.

12. Use according to claim 11, wherein the polyamide composition is as defined in any of claims 2 to 6.

## Patentansprüche

1. Polyamidzusammensetzung, umfassend
i) 23,95 Gew.-% bis weniger als 63,95 Gew.-% eines aliphatischen oder semiaromatischen Polyamids, ausgewählt aus der Gruppe bestehend aus Polyamid 11, Polyamid 12, Polyamid 6.10, Polyamid 6.12, Polyamid 4.10, Polyamid 6.6/6.T, Polyamid 10.10, Polyamid 6.18 und deren Mischungen, mit einem Gesamt-C/CONH-Verhältnis von größer als 6,
ii) 5 Gew.-% bis 20 Gew.-% eines Polyolefins und/oder eines Phenylether-Polymers,
iii) 1 Gew.-% bis 10 Gew.-% eines Kompatibilisators,
iv) 0,05 Gew.-% bis 1 Gew.-% eines thermischen Stabilisators, und
v) mehr als 30 Gew.-% bis 70 Gew.-% eines Füllstoffs,
jeweils bezogen auf das Gesamtgewicht der Zusammensetzung.

2. Polyamidzusammensetzung nach Anspruch 1, wobei das Polyamid ein Gesamt-C/CONH-Verhältnis von höchstens 12 aufweist.

3. Polyamidzusammensetzung nach Anspruch 1 oder 2, wobei der Kompatibilisator ein Ionomer ist, vorzugsweise ein Copolymer aus Ethylen und einer ethylenisch ungesättigten Säure.

4. Polyamidzusammensetzung nach Anspruch 1 oder 2, umfassend das Polyamid und ein Phenylether-Polymer, wobei der Kompatibilisator Zitronensäure ist.

5. Polyamidzusammensetzung nach einem der vorhergehenden Ansprüche, wobei der Füllstoff ein faseriger Füllstoff ist, vorzugsweise Glasfaser.

6. Polyamidzusammensetzung nach einem der vorhergehenden Ansprüche, wobei das Polyolefin und/oder das Phenylether-Polymer ausgewählt ist aus der Gruppe bestehend aus linearem Polyethylen niedriger Dichte (LLDPE), Polyethylen hoher Dichte (HDPE), Polypropylen (PP), Polyphenylethern (PPE), Polyphenylenoxiden (PPO) und deren Mischungen.

7. Verfahren zum Verringern der Freisetzung von Substanzen in Warmwasser und/oder zum Erhöhen der Beständigkeit gegenüber Oxidationsmitteln einer Zusammensetzung, umfassend
i) 23,95 Gew.-% bis weniger als 63,95 Gew.-% eines aliphatischen oder semiaromatischen Polyamids, ausgewählt aus der Gruppe bestehend aus Polyamid 11, Polyamid 12, Polyamid 6.10, Polyamid 6.12, Polyamid 4.10, Polyamid 6.6/6.T, Polyamid 10.10, Polyamid 6.18 und deren Mischungen, mit einem Gesamt-C/CONH-Verhältnis von größer als 6,
ii) 5 Gew.-% bis 20 Gew.-% eines Polyolefins und/oder eines Phenylether-Polymers,
iii) 1 Gew.-% bis 10 Gew.-% eines Kompatibilisators,
iv) 0,05 Gew.-% bis 1 Gew.-% eines thermischen Stabilisators, und
v) mehr als 30 Gew.-% bis 70 Gew.-% eines Füllstoffs,
jeweils bezogen auf das Gesamtgewicht der Zusammensetzung,
umfassend den Schritt des Vermischens des Polyamids mit einem Polyolefin und/oder einem Phenylether-Polymer.

8. Verwendung eines Artikels, umfassend eine Polyamidzusammensetzung, umfassend
i) 23,95 Gew.-% bis weniger als 63,95 Gew.-% eines aliphatischen oder semiaromatischen Polyamids, ausgewählt aus der Gruppe bestehend aus Polyamid 11, Polyamid 12, Polyamid 6.10, Polyamid 6.12, Polyamid 4.10, Polyamid 6.6/6.T, Polyamid 10.10, Polyamid 6.18 und deren Mischungen, mit einem Gesamt-C/CONH-Verhältnis von größer als 6,
ii) 5 Gew.-% bis 20 Gew.-% eines Polyolefins und/oder eines Phenylether-Polymers,
iii) 1 Gew.-% bis 10 Gew.-% eines Kompatibilisators,
iv) 0,05 Gew.-% bis 1 Gew.-% eines thermischen Stabilisators, und
v) mehr als 30 Gew.-% bis 70 Gew.-% eines Füllstoffs,
jeweils bezogen auf das Gesamtgewicht der Zusammensetzung,
für Warmwasseranwendungen, vorzugsweise für Anwendungen mit warmem Trinkwasser.

9. Verwendung nach Anspruch 8, wobei die Polyamidzusammensetzung gemäß einem der Ansprüche 2 bis 6 definiert ist.

10. Artikel, umfassend eine Polyamidzusammensetzung gemäß einem der Ansprüche 1 bis 6.

11. Verwendung einer Polyamidzusammensetzung, umfassend
i) 23,95 Gew.-% bis weniger als 63,95 Gew.-% eines aliphatischen oder semiaromatischen Polyamids, ausgewählt aus der Gruppe bestehend aus Polyamid 11, Polyamid 12, Polyamid 6.10, Polyamid 6.12, Polyamid 4.10, Polyamid 6.6/6.T, Polyamid 10.10, Polyamid 6.18 und deren Mischungen,
mit einem Gesamt-C/CONH-Verhältnis von größer als 6,
ii) 5 Gew.-% bis 20 Gew.-% eines Polyolefins und/oder eines Phenylether-Polymers,
iii) 1 Gew.-% bis 10 Gew.-% eines Kompatibilisators,
iv) 0,05 Gew.-% bis 1 Gew.-% eines thermischen Stabilisators, und
v) mehr als 30 Gew.-% bis 70 Gew.-% eines Füllstoffs,
jeweils bezogen auf das Gesamtgewicht der Zusammensetzung,
zur Herstellung eines Artikels für Warmwasseranwendungen, vorzugsweise für Anwendungen mit warmem Trinkwasser.

12. Verwendung nach Anspruch 11, wobei die Polyamidzusammensetzung gemäß einem der Ansprüche 2 bis 6 definiert ist.

## Revendications

1. Composition de polyamide, comprenant
i) de 23,95 % en poids à moins de 63,95 % en poids d'un polyamide aliphatique ou semiaromatique choisi dans le groupe constitué de polyamide 11, polyamide 12, polyamide 6.10, polyamide 6.12, polyamide 4.10, polyamide 6.6/6.T, polyamide 10.10, polyamide 6.18 et leurs mélanges, présentant un rapport C/CONH total supérieur à 6,
ii) de 5 % en poids à 20 % en poids d'un polyoléfine et/ou d'un polymère à base d'éther phénylique,
iii) de 1 % en poids à 10 % en poids d'un compatibilisant,
iv) de 0,05 % en poids à 1 % en poids d'un stabilisant thermique, et
v) de plus de 30 % en poids à 70 % en poids d'une charge,
chacun basé sur le poids total de la composition.

2. Composition de polyamide selon la revendication 1, dans laquelle le polyamide présente un rapport C/CONH total d'au plus 12.

3. Composition de polyamide selon la revendication 1 ou 2, dans laquelle le compatibilisant est un ionomère, de préférence un copolymère d'éthylène et d'un acide éthyléniquement insaturé.

4. Composition de polyamide selon la revendication 1 ou 2, comprenant le polyamide et un polymère à base d'éther phénylique, le compatibilisant étant l'acide citrique.

5. Composition de polyamide selon l'une quelconque des revendications précédentes, dans laquelle la charge est une charge fibreuse, de préférence une fibre de verre.

6. Composition de polyamide selon l'une quelconque des revendications précédentes, dans laquelle la polyoléfine et/ou le polymère à base d'éther phénylique est choisi dans le groupe constitué de polyéthylène linéaire basse densité (LLDPE), polyéthylène haute densité (HDPE), polypropylène (PP), polyphényléthers (PPE), polyphénylèneoxydes (PPO), et leurs mélanges.

7. Procédé permettant de réduire la libération de substances dans l'eau chaude et/ou d'augmenter la résistance aux agents oxydants d'une composition comprenant
i) de 23,95 % en poids à moins de 63,95 % en poids d'un polyamide aliphatique ou semiaromatique choisi dans le groupe constitué de polyamide 11, polyamide 12, polyamide 6.10, polyamide 6.12, polyamide 4.10, polyamide 6.6/6.T, polyamide 10.10, polyamide 6.18 et leurs mélanges, présentant un rapport C/CONH total supérieur à 6,
ii) de 5 % en poids à 20 % en poids d'un polyoléfine et/ou d'un polymère à base d'éther phénylique,
iii) de 1 % en poids à 10 % en poids d'un compatibilisant,
iv) de 0,05 % en poids à 1 % en poids d'un stabilisant thermique, et
v) de plus de 30 % en poids à 70 % en poids d'une charge,
chacun basé sur le poids total de la composition,
comprenant l'étape consistant à mélanger le polyamide avec une polyoléfine et/ou un polymère à base d'éther phénylique.

8. Utilisation d'un article comprenant une composition de polyamide, comprenant
i) de 23,95 % en poids à moins de 63,95 % en poids d'un polyamide aliphatique ou semiaromatique choisi dans le groupe constitué de polyamide 11, polyamide 12, polyamide 6.10, polyamide 6.12, polyamide 4.10, polyamide 6.6/6.T, polyamide 10.10, polyamide 6.18 et leurs mélanges,
présentant un rapport C/CONH total supérieur à 6,
ii) de 5 % en poids à 20 % en poids d'un polyoléfine et/ou d'un polymère à base d'éther phénylique,
iii) de 1 % en poids à 10 % en poids d'un compatibilisant,
iv) de 0,05 % en poids à 1 % en poids d'un stabilisant thermique, et
v) de plus de 30 % en poids à 70 % en poids d'une charge,
chacun basé sur le poids total de la composition,
pour des applications d'eau chaude, de préférence pour des applications d'eau potable chaude.

9. Utilisation selon la revendication 8, dans laquelle la composition de polyamide est définie selon l'une quelconque des revendications 2 à 6.

10. Article comprenant une composition de polyamide telle que définie dans l'une quelconque des revendications 1 à 6.

11. Utilisation d'une composition de polyamide comprenant
i) de 23,95 % en poids à moins de 63,95 % en poids d'un polyamide aliphatique ou semiaromatique choisi dans le groupe constitué de polyamide 11, polyamide 12, polyamide 6.10, polyamide 6.12, polyamide 4.10, polyamide 6.6/6.T, polyamide 10.10, polyamide 6.18 et leurs mélanges,
présentant un rapport C/CONH total supérieur à 6,
ii) de 5 % en poids à 20 % en poids d'un polyoléfine et/ou d'un polymère à base d'éther phénylique,
iii) de 1 % en poids à 10 % en poids d'un compatibilisant,
iv) de 0,05 % en poids à 1 % en poids d'un stabilisant thermique, et
v) de plus de 30 % en poids à 70 % en poids d'une charge,
chacun basé sur le poids total de la composition,
pour la préparation d'un article destiné à des applications d'eau chaude, de préférence d'eau potable chaude.

12. Utilisation selon la revendication 11, dans laquelle la composition de polyamide est définie selon l'une quelconque des revendications 2 à 6.
